**Europäisches Patentamt**

**European Patent Office**

**Office européen des brevets**

(19)

(11) Veröffentlichungsnummer: **0 480 282 B1**

# (12) EUROPÄISCHE PATENTSCHRIFT

(45) Veröffentlichungstag der Patentschrift: **12.07.95**

(21) Anmeldenummer: **91116672.6**

(22) Anmeldetag: **30.09.91**

(51) Int. Cl.6: **B32B 27/32**

Die Akte enthält technische Angaben, die nach dem Eingang der Anmeldung eingereicht wurden und die nicht in dieser Patentschrift enthalten sind.

(54) **Beidseitig niedrigsiegelnde, bedruckbare, biaxial orientierte Polyolefin-Mehrschichtfolie.**

(30) Priorität: **08.10.90 DE 4031784**

(43) Veröffentlichungstag der Anmeldung:
**15.04.92 Patentblatt 92/16**

(45) Bekanntmachung des Hinweises auf die Patenterteilung:
**12.07.95 Patentblatt 95/28**

(84) Benannte Vertragsstaaten:
**BE DE FR GB IT NL**

(56) Entgegenhaltungen:
**EP-A- 0 194 588**
**EP-A- 0 217 598**
**EP-A- 0 298 730**

(73) Patentinhaber: **HOECHST AKTIENGESELL-SCHAFT**

**D-65926 Frankfurt (DE)**

(72) Erfinder: **Murschall, Ursula, Dr.**
**Im Bacchuswinkel 11**
**W-6505 Nierstein (DE)**
Erfinder: **Speith, Angela**
**Biebricher Allee 112**
**W-6200 Wiesbaden (DE)**
Erfinder: **Peiffer, Herbert, Dr.**
**Thüringer Strasse 26**
**W-6500 Mainz-Finthen (DE)**

**Beschreibung**

Die Erfindung betrifft eine beidseitig niedrigsiegelnde, bedruckbare, biaxial orientierte Polyolefin-Mehrschichtfolie aus einer Basisschicht und mindestens einer Siegelschicht auf jeder Seite der Basisschicht. Die Mehrschichtfolie zeichnet sich durch eine niedrige Folientrübung, erhöhte Kratzfestigkeit, einen hohen Oberflächenglanz, Bedruckbarkeit, beidseitig niedrige Siegelanspringtemperaturen (niedrigsiegelnd), gute Gleiteigenschaften und universelle Brauchbarkeit auf schnellaufenden Verpackungsmaschinen aus. Die Erfindung betrifft ferner ein Verfahren zur Herstellung der Folie und ihre Verwendung.

Die EP-A-0 194 588 beschreibt eine Polyolefinfolie aus einer Polypropylen-Basisschicht mit beidseitig aufgebrachten Siegelschichten. Eine der beiden Siegelschichten enthält 0,5 bis 3 Gew.-% Polydialkylsiloxan inkorporiert. Diese Schicht A ist nicht coronabehandelt. Die andere Siegelschicht B ist coronabehandelt und enthält kein inkorporiertes Polydialkylsiloxan. Das Siloxan der nicht coronabehandelten Schicht A wird bei Kontakt der beiden Folienoberflächen, z. B. beim Aufwickeln, von der siloxanhaltigen Siegelschicht A auf die Oberfläche der anderen Siegelschicht B übertragen. Diese Schicht B weist auf ihrer äußeren Oberfläche dadurch eine relative Siloxanbelegung von höchstens 15 auf (bestimmt mittels ESCA-Spektroskopie).

Aus der DE-A-16 94 694 sind heissiegelbare Schichtstoffe bekannt, die aus einer orientierten Polypropylenfolie bestehen, die mindestens eine heissiegelfähige Schicht aus einem Ethylen-Propylen-Copolymeren aus 2 bis 6 Gew.-% Ethylen und 98 bis 94 Gew.-% Propylen enthält. Diese Folien besitzen zwar eine gute Heissiegelbarkeit, jedoch sind sie nicht im orwünschten Maße klar und kratzfest und zeigen zudem ungenügende Verarbeitungseigenschaften auf schnellaufenden Verpackungsmaschinen.

Aus der EP-B-0 027 586 sind siegelbare Polypropylenfolien bekannt, die eine Siegelschicht aus einem Ethylen-Homo- oder Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur DE-A-16 94 694 dar, besitzen aber noch eine unzureichende Laufsicherheit auf horizontalen Form-Füll-Schließmaschinen.

Aus der DE-A-29 41 140 ist ein Verpackungsmaterial bekannt, welches aus einer Grundschicht aus einem Polypropylenpolymerisat und aus einer Oberflächenschicht besteht, die aus einem Gemisch eines Propylen-Ethylen-Copolymerisats und eines $C_4$-$C_{10}$-$\alpha$-Olefin-Propylen-Copolymerisats besteht. Diese Oberflächenschicht kann auch ein niedrigmolekulares thermoplastisches Harz sowie Silikonöle enthalten. Derartige Verpackungsmaterialien weisen den Nachteil auf, daß sie kratzempfindlich sind und noch unbefriedigende optische Eigenschaften besitzen.

Aus der EP 0114 312 ist eine transparente polyolefinische Mehrschichtfolie bekannt, welche aus einer Basisschicht aus einem Propylenpolymeren und mindestens aus einer siegelbaren Schicht besteht. Die siegelbare Schicht besteht aus einer Olefinharzzusammensetzung, aus einem Ethylen-Propylen-Butylen-Polymeren und einem Propylen-Butylen-Polymeren und enthält 5 - 15 Gew.-% eines verträglichen Kohlenwasserstoff-Harzes, 5 - 15 Gew.-% Propylenhomopolymerisat und 0,3 - 1,5 Gew.-% Polydiorganosiloxan. Die Folie besitzt eine niedrige Siegelanspringtemperatur und eine gute Laufsicherheit auf schnellaufenden Verpackungsmaschinen. Die Folie ist aber nicht bedruckbar. Aufgrund des Harzzusatzes treten außerdem bei der Folienherstellung Harzablagerungen an den Längsstreckwalzen auf, die sich negativ auf die Folienoptik auswirken (Streifenbildung). Beim Nacharbeiten von Beispiel 1 der EP 0114 312 zeigte sich weiter, daß die Folie Defizite im Reibungsverhalten und eine schlechte Folienoptik (hohe Trübung, niedriger Glanz) aufweist. Außerdem treten Fließstörungen über die Folienbreite auf, die zu extremen Aussortierungen führen.

Ferner beschreibt die Firma Mitsui Petrochemical Industries, Ltd. in ihrem Prospekt TAFMER XR, Japan 82 03 1000 Cl ein $\alpha$-Olefin-Copolymeres, welches als Siegelschicht für Polypropylenfolien geeignet ist. Wie Vergleichsbeispiel 8 (s. Tab. 1) zeigt, sind aber Polypropylenfolien mit Siegelschichten in mancherlei Hinsicht noch nicht befriedigend.

Keine der bekannten Mehrschichtfolien erfüllt gleichzeitig die für eine Verpackungsfolie wichtigen Kriterien, beidseitig niedrige Siegeltemperatur in Kombination mit den Eigenschaften Bedruckbarkeit, hoher Oberflächenglanz, niedrige Trübung, homogene Folienoptik (keine Streifen, keine Fließstörungen), geringe Kratzempfindlichkeit, gutes Reibungsverhalten und gute Laufeigenschaften auf schnellaufenden Verpackungsmaschinen unterschiedlichen Typs.

Die vorliegende Erfindung hat sich deshalb die Aufgabe gestellt, eine transparente polyolefinische Mehrschichtfolie zu schaffen, die beidseitig eine niedrige Siegeltemperatur temperatur in Kombination mit Bedruckbarkeit, hohem Oberflächenglanz, geringer Trübung, homogener Folienoptik, niedriger Reibung und geringer Kratzempfindlichkeit besitzen soll, die auf konventionellen Biaxialstreckanlagen mit Walzenstreckung hergestellt werden kann und sich besonders als Verpackungsfolie mit guter Verarbeitbarkeit auf schnellaufenden Verpackungsmaschinen unterschiedlichen Typs auszeichnen soll.

2

Diese Aufgabe wird erfindungsgemäß durch eine Polypropylen-Mehrschichtfolie der eingangs genannten Gattung gelöst, deren kennzeichnende Merkmale darin bestehen, daß die Basisschicht ein peroxidisch abgebautes Propylenhomopolymerisat enthält und wobei dessen Abbaufaktor im Bereich von 3 bis 10 liegt und dieser Abbaufaktor definiert ist als

$$A = \frac{S_{G(PP)}}{S_{P(PP)}}$$

worin $S_{G(PP)}$ der Schmelzindex des abgebauten Propylenhomopolymer-Granulats ist und im Bereich von 2 bis 5,5 g/10 min liegt und

worin $S_{P(PP)}$ der Schmelzindex des Propylenhomopolymer-Ausgangspulvers ist und bei kleiner als 1,5 g/10 min liegt, und

die jeweiligen Schmelzindices nach DIN 53 735 bei 21,6 N und 230 °C bestimmt werden und die Siegelschichten ein Ethylen-Propylen-ButylenTerpolymeres und ein Propylen-Butylen-Copolymeres enthalten, wobei eine der beiden äußeren Siegelschichten ein Polydiorganosiloxan und Siliciumdioxidteilchen enthält und nicht coronabehandelt ist und wobei das Polydiorganosiloxan bei der Folienherstellung in Form eines Masterbatches zugegeben wird.

Weitere bevorzugte Ausführungsformen weisen die in den Unteransprüchen angegebenen Merkmale auf. Diese weiteren Merkmale der bevorzugten Ausführungsformen werden nachstehend beschrieben:

a) Die Basisschicht der Mehrschichtfolie besteht aus einem Propylenhomopolymerisat, das peroxidisch abgebaut ist, wobei sein Abbaufaktor A im Bereich von 3 bis 10 liegt.

b) Die Siegelschichten bestehen aus einer Olefinharzzusammensetzung, bestehend aus einem Ethylen-Propylen-Butylen-Terpolymeren und einem Propylen-Butylen-Copolymeren, wobei der Ethylen-, Propylen- und Butylen-Gehalt in der Ter-Copolymermischung von 0,1 bis 7 Gew.-% Ethylen, 53 bis 89,9 Gew.-% Propylen und 10 bis 40 Gew.-% Butylen (bezogen auf die Olefinharzzusammensetzung) variiert.

c) Eine Siegelschicht ist dadurch gekennzeichnet, daß sie 1,0 bis 4,0 Gew.-%, vorzugsweise 1,5 bis 3,0 Gew.-%, bezogen auf die Schicht, Polydialkylsiloxan mit einer Viskosität von größer 50.000 mm$^2$/s bei 25 °C, vorzugsweise von 100.000 bis 500.000 mm$^2$/s bei 25 °C, und 0,1 bis 1,0 Gew.-%, vorzugsweise 0,2 bis 0,5 Gew.-% Siliciumdioxid mit einem mittleren Teilchendurchmesser von 2 bis 4 $\mu$m inkorporiert enthält und daß diese Siegelschicht nicht coronabehandelt worden ist.

d) Das hochviskose Polydialkylsiloxan wird bei der Folienherstellung in Form eines Masterbatches (Wirkstoffkomponente: Polydialkylsiloxan hoher Viskosität, Basismaterial: olefinharzzusammensetzung bestehend aus einem Ethylen-Propylen-Butylen-Terpolymer und einem Propylen-Butylen-Copolymeren) zugegeben.

e) Die andere Siegelschicht ist dadurch gekennzeichnet, daß sie 0,1 - 1,0 Gew.-%, vorzugsweise 0,2 - 0,5 Gew.-%, bezogen auf die Schicht, Siliciumdioxid mit einem mittleren Teilchendurchmesser von 2 bis 4 $\mu$m inkorporiert enthält, und daß diese Siegelschicht coronabehandelt worden ist und Polydialkylsiloxan nicht inkorporiert, sondern als Schicht auf ihrer Außenfläche vorliegen hat, das beim Kontakt der beiden siegelschichten übertragen worden ist, wobei die relative Polydialkylsiloxanbelegung der coronabehandelten Außenfläche höchstens 18 beträgt, vorzugsweise 2 bis 12, bestimmt mit Hilfe der ESCA-Spektroskopie (ESCA = Electron Spectroscopy for Chemical Analysis).

f) Die coronabehandelte Siegelschicht besitzt erfindungsgemäß direkt nach der Herstellung eine oberflächenspannung von größer 36 mN/m und kleiner 40 mN/m.

g) Die siegelschichtdicke liegt erfindungsgemäß bei größer 0,5 $\mu$m, vorzugsweise bei 0,7 bis 1,0 $\mu$m.

zu a) Die Basisschicht besteht aus einem peroxidisch abgebauten Propylenpolymeren, das zum überwiegenden Teil aus Propylen besteht und einen Schmelzpunkt im Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Um die geforderte gute Optik zu erreichen, hat das peroxidisch abgebaute Polypropylenhomopolymerisat einen Abbaufaktor A von 3 bis 10, vorzugsweise von 4 bis 8. Der Schmelzindex des Polypropylen-Ausgangspulvers liegt bei kleiner 1,5 g/10 min, vorzugsweise bei 0,2 bis 0,9 g/10 min (Messung DIN 53 735, 21,6 N Belastung und 230 °C). Das Polypropylen-Ausgangspulver wird durch Zusatz von organischen Peroxiden [z. B. Dialkylperoxide wie 2,5-Dimethyl-2,5-di-(t-butylperoxy)-hexan oder Di-t-butylperoxid] beim Extrudieren auf einen Granulat-Schmelzindex von 2 bis 5,5 g/10 min (Messung DIN 53 735, 21,6 N Belastung und 230 °C) abgebaut. Der Abbaufaktor A des Polypropylenhomopolymerisates ist definiert als

$$A = \frac{S_{G(PP)}}{S_{P(PP)}}$$

mit $S_{G(PP)}$ = Schmelzindex des abgebauten PP-Granulates (PP = Polypropylen)
und $S_{P(PP)}$ = Schmelzindex des PP-Ausgangspulvers, wobei der Schmelzindex nach DIN 53 735 (21,6 N Belastung, 230 °C) gemessen wird.

Liegt der Abbaufaktor des Polypropylenhomopolymerisates unter 3, verschlechtern sich die optischen Eigenschaften (deutliche Erhöhung der Folientrübung, Erniedrigung des Oberflächenglanzes). Liegt der Abbaufaktor über 10 treten Probleme bei der Verstreckung auf, was sich äußerst negativ auf die Laufsicherheit bei der Folienproduktion auswirkt. Bei einem Abbaufaktor über 10 ist das Polypropylenhomopolymere nur noch in einem sehr engen Temperaturbereich oder gar nicht mehr verstreckbar.

Die Basisschicht aus dem peroxidisch abgebauten Propylenpolymeren kann zusätzlich übliche Additive, wie z. B. Antistatika, Gleitmittel und Stabilisatoren enthalten.

Der peroxidische Abbau bzw. peroxidisch abgebaute oder CR ("controlled rheology") Polypropylen-Homopolymere als solche sind in der Literatur bekannt (vgl. Plastverarbeiter, 38. Jahrgang, 1985, Nr. 4; Polymer Engineering and Science, März 1989, Vol. 29, No. 6; Poastverarbeiter, 36. Jahrgang, 1985, Nr. 11). Derartige peroxidisch abgebaute Polypropylen-Homopoymere kommen insbesondere bei der Spritzgußtechnik und der Faserherstellung zum Einsatz. Peroxidisch abgebaute $C_2/C_3$-Copolymere mit einem $C_2$-Gehalt von 1 bis 2,5 Gew.-% werden teilweise auch für unverstreckte Bürofolien (Organisationssektor) eingesetzt. Wie groß der Abbaufaktor bei diesen Produkten ist, wird aber nicht beschrieben.

zu b) Die in den erfindungsgemäßen Mehrschichtenfolien enthaltene Olefinharzzusammensetzung der siegelbaren Schichten hat einen bei 20 °C p-xylollöslichen Anteil von 25 bis 70 Gew.-%, bevorzugt von 40 bis 60 Gew.-% Der Schmelzpunkt der Olefinharzzusammensetzung liegt bei 120 °C oder höher. Die Olefinharzzusammensetzung hat einen Schmelzflußindex von 1 bis 16 g/10 min bei 230 °C und 21,6 N Belastung (DIN 53 735), insbesondere von 4 bis 10 g/10 min bei 230 °C und 2,16 kp Belastung.

Als besonders geeignet hat sich das Copolymere aus $\alpha$-Olefinen erwiesen, welches von Mitsui Petrochemical Industries, Ltd. unter dem Namen [R]Tafmer XR-107 L vertrieben wird.

zu c) Erfindungsgemäß enthält die Siegelschicht, welche nicht coronabehandelt wird, neben 0,1 bis 1,0 Gew.-%, vorzugsweise 0,2 bis 0,5 Gew.-%, bezogen auf die Schicht, Siliciumdioxid mit einem mittleren Teilchendurchmesser von 2 bis 4 $\mu$m 1,0 bis 4,0 Gew.-%, vorzugsweise 1,5 bis 3,0 Gew.-%, bezogen auf die Schicht, Polydialkylsiloxan mit einer Viskosität von größer 50.000 mm²/s bei 25 °C, vorzugsweise von 100.000 bis 500.000 mm²/s bei 25 °C, inkorporiert.

Als Beispiele für geeignete Polydiorganosiloxane sind Polydialkylsiloxane, olefinmodifizierte Siloxanöle, polyethermodifizierte Siliconöle, olefin/polyethermodifizierte Siliconöle, epoxymodifizierte Siliconöle und alkoholmodifizierte Siliconöle, Polydialkylsiloxane mit vorzugsweise 1-4 Kohlenstoffatomen in der Alkylgruppe, insbesondere Polydimethylsiloxane, hervorzuheben.

Weniger als 0,8 Gew.-%, bezogen auf die siegelbare Schicht, an Polydiorganosiloxan sollten als Komponente c) nicht enthalten sein, da dies bei der beschriebenen Rohstoffkombination noch zu erhöhten Aussortierungen an den schnellaufenden Verpackungsmaschinen führt, während größere Mengen als 3,0 Gew.-%, bezogen auf die siegelbare Schicht, an Polydiorganosiloxan zu verfahrenstechnischen Schwierigkeiten bei der Folienherstellung und zu Fehleinschlägen in den Verpackungsmaschinen infolge zu geringer Reibung führen.

Liegt die Viskosität des eingesetzten Polydialkylsiloxans unter 100.000 insbesondere unter 50.000 mm²/s bei 25 °C, so zeigt die Mehrschichtfolie störende Fließstörungen über die Folienbreite. Bei den Folien mit Fließstörungen enthält die Siegelschicht 2,4 Gew.-% Polydimethylsiloxan mit einer Viskosität von 30.000 mm²/s bei 25 °C. Bei der Folie ohne Fließstörung ist die Siegelschicht mit 2,4 Gew.-% Polydimethylsiloxan mit einer Viskosität von 300.000 mm²/s bei 25 °C ausgerüstet.

Bei Versuchen zeigte sich, daß ein Polydimethylsiloxan mit einer Viskosität von 300.000 bis 500.000 mm²/s bei 25 °C ganz besonders geeignet ist.

zu d) Erfindungsgemäß wird das hochviskose Polydialkylsiloxan bei der Folienherstellung in Form eines Masterbatches zugegeben.

Unter dem Begriff Masterbatch ist im Rahmen der vorliegenden Erfindung eine Stammischung zu verstehen, insbesondere ein granulatförmiges staubfreies Konzentrat eines Kunststoffrohstoffes mit hohen Mengen an Wirkstoffkomponente, das in der Masseaufbereitung als Zwischenprodukt verwendet wird, so als Zusatz zu keine Wirkstoffkomponenten enthaltendem Granulat vor dem Extrudieren, um daraus bestimmte Mengen an Wirkstoffkomponenten enthaltenden Formkörpern herzustellen. Das erfindungsgemäß eingesetzte Masterbatch zeichnet sich dadurch aus, daß es zwischen 6 und 18 Gew.-%, bezogen auf das Gesamtgewicht aus Polymeren plus Wirkstoffkomponenten, an Wirkstoffkomponenten enthält, und daß es als zylinder- oder linsenförmiges Granulat vorliegt.

Bei den Wirkstoffkomponenten handelt es sich um die beschriebenen Polydiorganosiloxane. Als Wirkstoffkomponente ist ein Polydimethylsiloxan mit einer Viskosität von größer 50.000 mm$^2$/s bei 25 °C, insbesondere von 100.000 bis 500.000 mm$^2$/s bei 25 °C besonders bevorzugt. Das Masterbatch kann auch zusätzlich zweckmäßige Additive wie Antiblockmittel, Antioxidantien, Antistatika und/oder Stabilisatoren in einer jeweils wirksamen Menge enthalten.

Wenn das Masterbatch als zylinderförmiges Granulat vorliegt, liegen die mittleren Durchmesser der Zylinder bevorzugt im Bereich von 1 bis 2 mm und die mittlere Länge der Zylinder im Bereich von 0,5 bis 1,5 mm. Wenn das Masterbatch als linsenförmiges Granulat vorliegt, sollen die Linsen einen mittleren Durchmesser im Bereich von 1 bis 3 mm und eine mittlere Dicke im Bereich von 0,5 bis 1 mm aufweisen.

Als bevorzugtes Polymeres wird im Rahmen der vorliegenden Erfindung die als siegelbare Schicht beschriebene Olefinharzzusammensetzung, bestehend aus einem Ethylen-Propylen-Butylen-Terpolymeren und einem Propylen-Butylen-Copolymeren, eingesetzt.

Das Masterbatch wird nach dem erfindungsgemäßen Verfahren vor dem Einfüllen des Polymerengranulates in den Extruder in einer derartigen Menge zu dem Granulat aus keine Wirkstoffkomponente enthaltenden Polymeren zugemischt, daß der gewünschte Gewichtsprozentanteil an Wirkstoffkomponenten in der Folie bzw. in der siegelbaren Schicht realisiert wird.

Das als zylinderförmiges Granulat vorliegende Masterbatch weist eine Schüttgutdichte von größer als 570 kg/m$^3$, vorzugsweise von 600 - 800 kg/m$^3$, auf. Hauptsächlich wird die erhöhte Schüttgutdichte durch die schweren, jedoch sehr kleinen Körner erzielt.

Überraschenderweise wurden durch Einsatz des beschriebenen Masterbatches zwei weitere sehr positive Effekte erzielt, die zu einer wesentlichen Verbesserung der Wirtschaftlichkeit und der Folienqualität der damit hergestellten Folien führen.

Es wurde mit dem Einsatz des Masterbatches eine Erhöhung des Extruderausstoßes erzielt, und zwar etwa um das Maß der Dichteerhöhung.

Nach Messungen an förderwirksamen genuteten Einzugszonen (siehe Kunststoffe 72 (1982) 5, 262-266) ist der für eine vorgegebene Geometrie aus Schneckendurchmesser D und Drehzahl n zu berechnende Massedurchsatz $\dot{m}$ alleine noch von der Schüttgutdichte $\rho_s$ abhängig:

$$\dot{m} = K \cdot \rho_s \cdot n \cdot D^3 \qquad (1)$$

K bedeutet in der Formel eine Konstante, in die unter anderem die Reibwerte des Polymeren am Zylinder und an der Schnecke eingehen. Nimmt man an, daß durch die Zugabe des Masterbatches das Verhältnis der Reibwerte des Polymeren an Schnecke und Zylinder zueinander nahezu konstant bleibt, so ergibt sich der beim Einsatz des Masterbatches resultierende Massedurchsatz $\dot{m}^{MB}$ sofort aus

$$\dot{m}^{MB} = \frac{\rho_s^{MB}}{\rho_s} \cdot \dot{m} \qquad (2)$$

$\rho_s^{MB}$ = Schüttgutdichte mit Masterbatch

$\rho_s$ = Schüttgutdichte ohne Masterbatch

Beträgt beispielsweise $\dot{m}$ etwa 100 kg/h, so ist mit den Zahlenwerten für $\rho_s$ und $\rho_s^{MB}$ der Durchsatz bei Einsatz von Masterbatch

$$\dot{m}^{MB} = \frac{730}{570} \cdot 100 = 128 \text{ kg/h.}$$

Der zweite positive Effekt ist in einer drastischen Verminderung der Druckschwankungen am Ausgang des Extruders zu sehen.

Wurden bei Einsatz einer mit hochviskosem Polydialkylsiloxan ausgerüsteten Olefinharzzusammensetzung (Auftrommeln des Gleitmittels oder Einarbeiten des Gleitmittels) Druckschwankungswerte am Ausgang des Extruders von 10 bis 15 bar gemessen, so betragen sie bei dem erfindungsgemäßen Verfahren nur noch maximal 3 bar. Durch den Einsatz des Masterbatches gemäß der Erfindung lassen sich überraschenderweise Folien herstellen mit gleichmäßigeren Folieneigenschaften, vor allem mit einer homogeneren Folienoptik (keine Fließstörungen) und mit einer besseren Dickengleichmäßigkeit der Siegelschicht, die eine höhere Prozeßsicherheit und eine bessere Weiterverarbeitbarkeit der Folie bedeutet.

zu e) Die andere coronabehandelte Siegelschicht enthält erfindungsgemäß 0,1 - 1,0 Gew.-%, vorzugsweise 0,2 - 0,5 Gew.-%, bezogen auf die Schicht, eines Antiblockmittels wie z. B. Siliciumdioxid mit einem mittleren Teilchendurchmesser von vorzugsweise 2 bis 4 $\mu$m. Bei dieser Siegelschicht ist das Poldialkylsiloxan nicht inkorporiert, sondern als Belag (auf ihrer äußeren Oberfläche) anwesend. Die Coronabehandlung dieser Schicht erfolgt vor der Polydialkylsiloxanbelegung, wodurch erreicht wird, daß die erfindungsgemäße Folie auf dieser Schicht bedruckbar ist und gleichzeitig auch all die anderen o. g. wichtigen Eigenschaften besitzt. Erfindungsgemäß ist es also in einfacher Weise nämlich durch Kontakt einer polydialkylsiloxan-inkorporierten Siegelschicht mit der Außenfläche der anderen der beiden, nicht polydialkylsiloxanhaltigen Siegelschichten, möglich, Coronabehandlung und Polydialkylsiloxananwesenheit in einer Siegelschicht zu kombinieren und die damit angestrebten Effekte (gute Bedruckbarkeit, gute Gleiteigenschaften, niedrige Siegelanspringtemperatur und gute Siegelbarkeit) gemeinsam zu erreichen, ohne irgendwelche nachteiligen Wirkungen auf weitere wichtige Eigenschaften in Kauf nehmen zu müssen.

Die Menge an hochviskosem Polydialkylsiloxan, die auf die Außenfläche der Siegelschicht übertragen wird, stellt nur einen Bruchteil des in der anderen Siegelschicht inkorporierten hochviskosen Polydialkylsiloxans dar. Die der Olefinharzzusammensetzung der anderen Siegelschicht zugesetzte Menge an hochviskosem Polydialkylsiloxan von 1,0 bis 4,0 Gew.-%, vorzugsweise 1,5 bis 3,0 Gew.-% (Gewichtsprozente bezogen auf das Gesamtgewicht der Schicht) vermindert sich demnach durch die erwähnte Übertragung nicht wesentlich.

Beträgt der Wert der mit Hilfe der ESCA-Spektroskopie gemessenen relativen Belegung der Außenfläche mehr als 18, liegt bereits derart viel Polydialkylsiloxan vor, daß sich beim Einsatz der Folie verfahrenstechnische Probleme ergeben könnten. Andererseits kann es bei sehr kleinen Werten zu einer Beeinträchtigung der Gleitfähigkeit der Folie kommen.

Die relative Polydialkylsiloxan-Belegung beträgt demnach vorzugsweise 2 bis 12.

Die genannte Belegung mit Polydialkylsiloxan erfolgt durch Kontakt der beiden Siegelschichten. Kontakt der Siegelschichten liegt beispielsweise vor, wenn die Folie nach ihrer Herstellung bei der dann vorliegenden Temperatur (in der Regel etwa Raumtemperatur) aufgewickelt wird, weil dabei die beiden Siegelschichten unter enger gegenseitiger Berührung aufeinander zu liegen kommen. Die beabsichtigte Übertragung wird zusätzlich noch dadurch gefördert, daß die beiden Siegelschichten mit dem durch das Aufwickeln erzeugten Druck in Kontakt sind. Es hat sich herausgestellt, daß die Polydialkylsiloxan-Übertragung schon nach kurzer Zeit des Kontaktes stattfindet und die geforderte Belegung vorliegt.

zu f) Die coronabehandelte Siegelschicht zeigt direkt nach der Herstellung eine Oberflächenspannung von größer 36 mN/m und kleiner 40 mN/m. Diese Vorbehandlungsintensität sollte zweckmäßigerweise in diesen engen Grenzen eingehalten werden. Liegt die Oberflächenspannung unter 36 mN/m, ist die Folie nur noch schlecht bedruckbar. Außerdem sind die Langzeitbedruckbarkeits- und Langzeitbeschichtbarkeitseigenschaften äußerst ungünstig. Zeigt die coronabehandelte Schicht direkt nach der Herstellung eine Oberflächenspannung von größer oder gleich 40 mN/m, erhöht sich die Siegelanspringtemperatur um ca. 10 °C. Außerdem verschlechtert sich die Siegelnahtfestigkeit erheblich.

zu g) Liegt die Siegelschichtdicke unter 0,7 $\mu$m, insbesondere unter 0,5 $\mu$m, verschlechtern sich wiederum die Siegeleigenschaften (Erhöhung der Siegelanspringtemperatur, Erniedrigung der Siegelnahtfestigkeit) und die Coronabehandelbarkeit. Außerdem ist das Langzeitverhalten der Vorbehandlungsintensität ungünstig. Bei Schichtdicken von größer 2 $\mu$m verschlechtert sich die Folienoptik (Erhöhung der Trübung) und das Verarbeitungsverhalten auf schnellaufenden Verpackungsmaschinen. Gute Siegeleigenschaften (niedrige Siegelanspringtemperatur, hohe Siegelnahtfestigkeiten), gute Coronabehandelbarkeit, günstiges Langzeitverhalten der Bedruckbarkeit bzw. Beschichtbarkeit in Kombination mit einer niedrigen Folientrübung und einem günstigen Verarbeitungsverhalten werden erreicht, wenn die Dicke der Siegelschicht(en) vorzugsweise bei 0,7 bis 1,0 $\mu$m liegt.

Um bestimmte Eigenschaften der erfindungsgemäßen Polyolefinfolie noch weiter zu verbessern können sowohl die Basisschicht als auch die beiden Siegelschichten entsprechende Zusätze in einer jeweils wirksamen Menge enthalten, vorzugsweise Antistatika, Stabilisatoren und/oder niedrigmolekulare Kohlenwasserstoffharze, die mit dem Polymeren der Basisschicht und der Siegelschichten verträglich sind.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, worunter N, N'-bis (2-hydroxyethyl)-alkylamine mit $C_{10}$-$C_{20}$, vorzugsweise $C_{12}$-$C_{18}$ als Alkylgruppen besonders geeignet sind. Die wirksame Menge an Antistatikum liegt im Bereich von 0,05 bis 3 Gew.-%, bezogen auf die Schicht. Im Falle des Einsatzes von polyethermodifiziertem Polysiloxan wird dieses nur dem Polymeren für die Basisschicht und/oder dem Polymeren jener der beiden Siegelschichten zugesetzt, die als polydialkylsiloxan-inkorporierte Schicht vorgesehen ist.

Als Stabilisatoren können die üblichen stabilisierend wirkenden Verbindungen für Ethylen-, Propylen- und anderen $\alpha$-Olefinpolymeren eingesetzt werden. Die wirksame Menge beträgt im allgemeinen 0,1 bis 2 Gew.-% bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C (bestimmt nach ASTM E-28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4.Auflage, Band 2, Seiten 539 bis 553, beschrieben).

Die wirksame Menge an niedermolekularem Harz beträgt 3 - 15 Gew.-%, vorzugsweise 5 - 10 Gew.-% bezogen auf die Schicht.

Die Dicke der erfindungsgemäßen Polyolefin-Mehrschichtfolie kann innerhalb weiter Grenzen variieren und richtet sich insbesondere nach dem beabsichtigten Einsatz. Ihre Gesamtdicke beträgt im allgemeinen 10 bis 50 $\mu$m, vorzugsweise 20 bis 40 $\mu$m, wobei die Siegelschichten jeweils größer 0,5 $\mu$m, vorzugsweise 0,7 - 1,0 $\mu$m dick sind (die Dicke der Basisschicht macht etwa 50 bis 90 % der Gesamtfoliendicke aus).

Die Herstellung der erfindungsgemäßen Mehrschichtfolie, wobei die Deckschichten gleiche oder unterschiedliche Zusammensetzung aufweisen können, erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung abgekühlt wird, die Folie biaxial gestreckt (orientiert), die biaxial gestreckte Folie thermofixiert und an der zur Coronabehandlung vorgesehenen Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert und verflüssigt. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50 °C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7:1 und in Querrichtung vorzugsweise 8 bis 10:1 gestreckt. Die Längsstreckung wird bei einer Folientemperatur von vorzugsweise 120 bis 140 °C durchgeführt und die Querstreckung vorzugsweise bei 160 bis 175 °C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten.

Die Coronabehandlung erfolgt vorzugsweise mit einer Wechselspannung von etwa 10.000 V und 10.000 Hz. Die so hergestellte Folie wird in üblicher Weise mit Hilfe einer Aufwickeleinrichtung aufgewickelt und besitzt direkt nach der Herstellung eine Oberflächenspannung auf der behandelten Seite von größer 36 mN/m und kleiner 40 mN/m.

Die erfindungsgemäße Polyolefin-Mehrschichtfolie eignet sich besonders als Verpackungsfolie auf schnellaufenden Einschlagmaschinen unterschiedlichen Typs. Sie besitzt all die wichtigen Eigenschaften, die von Polyolefinfolien im Hinblick auf schnellaufende Maschinen gefordert werden. Sie weist insbesondere beidseitig eine niedrige Siegelanspringtemperatur und hohe Siegelnahtfestigkeiten auf, in Kombination mit einer niedrigen Folientrübung, einem hohen Oberflächenglanz, einer homogenen Folienoptik (keine Fließstörungen), einer geringen Kratzempfindlichkeit, einem guten Reibungsverhalten, einer guten Coronabehandelbarkeit, einer guten Bedruckbarkeit, einem günstigen Langzeitverhalten der Bedruckbarkeit bzw. Beschichtbarkeit und einem guten Verarbeitungsverhalten (Maschinengängigkeit). Die Folie eignet sich ebenfalls für die Herstellung von Laminaten mit Papier, Pappe, metallisierten Kunststoffolien und Kunststoffolien.

Die Erfindung wird im folgenden an Beispielen näher erläutert:

Beispiel 1:

Mit Hilfe des Koextrusionsverfahrens wird aus einer Breischlitzdüse bei einer Extrusionstemperatur von 260 °C als Summe eine 1 mm dicke Dreischichtfolie extrudiert, deren Basisschicht aus einem peroxidisch abgebauten (isotaktischen) Polypropylen-Homopolymerisat mit einem n-heptanlöslichen Anteil von 4,5 Gew.-% und einem Schmelzpunkt von 165 °C als Hauptkomponente besteht.

Das Polypropylenpolymere wurde von einem Polypropylen-Ausgangspulver mit einem Schmelzindex $S_{P(PP)}$ von 0,7 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 5 ergibt.

Die Basisschicht ist von den verschiedenen Siegelschichten (Außenschichten, Deckschichten) umgeben, d. h. die Dreischichtfolie zeigt einen A-B-C-Aufbau (A und C = Siegelschichten, B = Basisschicht).

Alle Schichten enthalten zur Stabilisierung 0,12 Gew.-% Pentaerythrityl-Tetrakis-4-(3,5-ditertiärbutyl-4-hydroxyphenyl)-propionat ([R]Irganox 1010) sowie zur Neutralisierung saurer Katalysatorreste 0,06 Gew.-% Calciumstearat. Die Basisschicht enthält weiterhin 0,15 Gew.-% an N,N'-bis-(2-hydroxyethyl)-($C_{10}$-$C_{20}$)-alkylamin ([R]Armostat 300) als Antistatikum.

Eine Siegelschicht (A-Schicht) besteht aus 97,4 Gew.-% einer Olefinharzzusammensetzung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere) sowie

$a_2$) 50 Gew.-% eines Propylen-Butylen-Copolymeren, bestehend aus 66,8 Gew.-% Propylen und 33,2 Gew.-% Butylen (bezogen jeweils auf das Copolymere) zusammensetzt ($a_1$ + $a_2$ = TAFMER XR-107 L), was einem Gehalt von 0,7 Gew.-% Ethylen, 81,3 Gew.-% Propylen und 18 Gew.-% Butylen, bezogen auf das TAFMER XR-107 L, entspricht. Die Olefinzusammensetzung $a_1$ + $a_2$ hatte einen Schmelzflussindex von 8 g/10 min und einen Schmelzpunkt von 150 °C.

b) 0,2 Gew.-%, bezogen auf die Siegelschicht, an Siliciumdioxid mit einem mittleren Teilchendurchmesser von 4,0 $\mu$m.

c) 2,4 Gew.-%, bezogen auf die Siegelschicht, an Polydimethylsiloxan mit einer kinematischen Viskosität von 500.000 mm²/s bei 25 °C.

Das hochviskose Polydimethylsiloxan wird der obengenannten Olefinharzzusammensetzung (Tafmer XR 107 L) vor dem Extrudieren über ein Masterbatch zugegeben. Das Masterbatch besteht aus 12 Gew.-% des hochviskosen Polydimethylsiloxans und 88 Gew.-% der Olefinharzzusammensetzung (Tafmer XR 107 L), d. h. das Masterbatch wird in einer Konzentration von 20 Gew.-% zudosiert.

Diese Siegelschicht (A-Schicht) ist also aus 97,4 Gew.-% von dem genannten Polymergemisch (Tafmer XR 107 L), 0,2 Gew.-% von dem genannten Siliciumdioxid und 2,4 Gew.-% von dem genannten Siloxan gebildet.

Die andere Siegelschicht (C-Schicht), die später coronabehandelt wird, besteht aus dem gleichen Polymergemisch (Tafmer XR 107 L) und enthält kein Polysiloxan, sondern lediglich 0,2 Gew.-%, bezogen auf die Siegelschicht, an Siliciumdioxid mit einem mittleren Teilchendurchmesser von 4,0 $\mu$m inkorporiert.

Die Dreischichtfolie wird auf einer 30 °C warmen Kühlwalze abgeschreckt. Danach wird die Folie von der Kühlwalze auf ein Walzentrio von ebenfalls 30 °C übergeben und nach Erwärmung auf 130 °C von einem weiteren Walzentrio um den Faktor 5 längsgestreckt. Anschließend wird sie bei 175 °C Lufttemperatur auf das 10 fache in Querrichtung verstreckt. Anschließend erfolgt die Coronabehandlung der C-Schicht (Siegelschicht, die kein Polysiloxan inkorporiert enhält) mit einer Wechselspannung von etwa 10.000 Volt und 10.000 Hz. Die so hergestellte Folie wird mit einer Aufwickeleinrichtung aufgewickelt und besitzt direkt nach der Herstellung auf der behandelten Seite (C-Schicht) eine Oberflächenspannung von 38-39 mN/m.

Die so gebildete Mehrschichtfolie hat eine ca. 19 $\mu$m dicke Basisschicht aus peroxidisch abgebautem Polypropylen und auf jeder Seite eine Siegelschicht der Dicke 0,8-0,9 $\mu$m.

Beispiel 2

Beispiel 1 wird wiederholt.

Das (isotaktische) Propylen-Homopolymerisat der Basisschicht wurde jedoch von einem Polypropylen-Ausgangspulver mit einen Schmelzindex $S_{P(PP)}$ von 0,5 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 7 ergibt.

Beispiel 3

Beispiel 1 wird wiederholt.

Die Siegelschicht, die nicht coronabehandelt wird (A-Schicht), besteht aus 98,6 Gew.-% der in Beispiel 1 beschriebenen Olefinharzzusammensetzung (Tafmer XR 107 L), 0,2 Gew.-%, bezogen auf die Siegelschicht, an Siliziumdioxid mit einem mittleren Teilchendurchmesser von 4,0 $\mu$m und 1,6 Gew.-%, bezogen auf die Siegelschicht, an Polydimethylsiloxan mit einer kinematischen Viskosität von 500.000 mm$^2$/s bei 25 °C. Das hochviskose Polysiloxan, wird wie in Beispiel 1 angegeben über ein Masterbatch, das aus 12 Gew.-% des hochviskosen Polysiloxans und aus 88 Gew.-% der beschriebenen Olefinharzzusammensetzung (Tafmer XR 107 L) besteht, zugegeben.

Beispiel 4

Beispiel 3 wird wiederholt.

Das hochviskose Polydimethylsiloxan wird jedoch über ein Masterbatch zugegeben, daß aus 8 Gew.-% Polysiloxan mit einer kinematischen Viskosität von 500.000 mm$^2$/s bei 25 °C und 92 Gew.-% des genannten Polymergemisches (Tafmer XR 107 L) besteht.

Beispiel 5

Beispiel 1 wird wiederholt.

Das Polydimethylsiloxan, welches der Siegelschicht (A-Schicht), die nicht coronabehandelt wird, als Gleitmittel zugesetzt wird, besitzt eine kinematische Viskosität von 300.000 mm$^2$/s bei 25 °C.

Vergleichsbeispiel 1

Beispiel 1 wird wiederholt.

Das isotaktische Propylen-Homopolymerisat besitzt ebenfalls einen Granulatschmelzindex von 3,5 g/10 min (DIN 53 735 bei 21,6 N Belastung und 230 °C). Das Polypropylenpolymere der Basissicht ist aber nicht abgebaut.

Vergleichsbeispiel 2

Beispiel 1 wird wiederholt.

Das Polydimethylsiloxan, welches der Siegelschicht (A-Schicht), die nicht coronabehandelt wird, als Gleitmittel zugegeben wird, besitzt eine kinematische Viskosität von 30.000 mm$^2$/s bei 25 °C.

Vergleichsbeispiel 3

Beispiel 1 wird wiederholt.

Die hergestellte Dreischichtfolie besitzt direkt nach der Herstellung auf der behandelten Seite, d. h. auf der Siegelschicht, die kein Polysiloxan inkorporiert enthält (C-Schicht), eine Oberflächenspannung von 41-42 mN/m (eingestellt durch Variation (Erhöhung) der Coronabehandlungsintensität).

Vergleichsbeispiel 4

Beispiel 1 wird wiederholt.

Die gebildete Dreischichtfolie besitzt Siegelschichten, die eine Dicke von 0,4-0,5 $\mu$m haben.

Vergleichsbeispiel 5

Es wird eine Dreischichtfolie entsprechend Beispiel 1 der europäischen Patentschrift 0114312 hergestellt. Die Siegelschichten (A- und C-Schicht) bestehen aus

a) 79 Gew.-%, bezogen auf die Siegelschicht, einer Olefinharzzusammenstelltung, die sich aus

$a_1$) 50 Gew.-% eines Ethylen-Propylen-Butylen-Terpolymeren bestehend aus 1,4 Gew.-% Ethylen, 2,8 Gew.-% Butylen und 95,8 Gew.-% Propylen (jeweils bezogen auf das Terpolymere) sowie

$a_2$) 50 Gew.-% eines Propylen-Butylen-Copolymeren bestehend aus 66,8 Gew.-% Propylen und 33,2 Gew.-% Butylen (bezogen jeweils auf das Copolymere)

zusammensetzt, was einem Gehalt von 0,7 Gew.-% Ethylen, 81,3 Gew.-% Propylen und 18 Gew.-% Butylen, bezogen auf die Olefinharzzusammensetzung, entspricht. Die Olefinzusammensetzung $a_1$ + $a_2$ hat einen Schmelzflußindex von 8 g/10 min und einen Schmelzpunkt von 150 °C;

b) 10 Gew.-%, bezogen auf die Siegelschicht, von einem hydrierten Kohlenwasserstoffharz mit einem Erweichungspunkt von 125 °C;

c) 10 Gew.-%, bezogen auf die Siegelschicht, eines Propylen-Homopolymers mit einem Schmelzpunkt von 126 °C;

d) 1 Gew.-%, bezogen auf die Siegelschicht, an Polydimethylsiloxan einer kinematischen Viskosität von 30.000 mm$^2$/s bei 25 °C.

Vergleichsbeispiel 6

Beispiel 1 wird wiederholt, jedoch bestehen die Siegelschichten aus einem statistischen Ethylen-Propylen-Copolymerisat mit 4,5 Gew.-% Ethylen ohne weitere Zusätze (Vergleich gegen DE-OS 16 94 694).

Vergleichsbeispiel 7

Beispiel 1 wird wiederholt, jedoch wird für die Siegelschichten der Rohstoff nach Beispiel 2 der europäischen Patentschrift 27 586, eingesetzt.

Vergleichsbeispiel 8

Beispiel 1 wird wiederholt.

Das isotaktische Propylen-Homopolymerisat besitzt ebenfalls einen Granulatschmelzindex von 3,5 g/10 min (DIN 53 735 bei 21,6 N Belastung und 230 °C). Das Polypropylenpolymere der Basisschicht ist aber nicht peroxidisch abgebaut.

Die Siegelschichten bestehen lediglich aus der in Beispiel 1 beschriebenen Olefinharzzusammensetzung (Tafmer XR 107 L). Diese Mischung entspricht einem Gehalt von 0,7 Gew.-% Ethylen, 81,3 Gew.-% Propylen und 18 Gew.-% Butylen, bezogen auf die Siegelschicht.

Charakterisierung der Rohstoffe

Zur Charakterisierung der Rohstoffe und Folien werden folgende Meßmethoden benutzt:

Erweichungspunkt

ASTM E 28

Schmelzpunkt

DSC-Messung, Maximum der Schmelzkurve, Aufheizgeschwindigkeit 20 °C/min.

Bestimmung der Niederdruck-Siegelnahtfestigkeit

Zwei 15 mm breite Folienstreifen werden übereinander gelegt und bei 110 °C, einer Siegelzeit von 0,5 s und einem Siegeldruck von 1,5 N/cm$^2$ (Gerät: Brugger, Typ NDS, einseitig beheizte Siegelbacke) versiegelt. Die Siegelnahtfestigkeit wird nach der T-Peel-Methode bestimmt.

Bestimmung der Siegelanspringtemperatur

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbakken bei einem Siegeldruck von 15 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet.

Die Siegelanspringtemperatur (oder minimale Siegeltemperatur) ist die Temperatur, bei der eine Siegelnahtfestigkeit von 0,5 N/15 mm erreicht wird.

Maschinengängigkeit

Die Bestimmung der Maschinengängigkeit (Laufsicherheit) auf der vertikalen Formfüllschließmaschine (vFFs), der horizontalen Formfüllschließmaschine (hFFs) und der Einschlagmaschine erfolgte visuell und wurde wie folgt bewertet:

sehr gut (+ +)     < 2 % der Probepäckchen sind mangelhaft eingeschlagen
gut (+)            2-6 % der Probepäckchen sind mangelhaft eingeschlagen
mäßig (+ -)        6-12 % der Probepäckchen sind mangelhaft eingeschlagen
schlecht (-)       12 % und mehr der Probepäckchen sind mangelhaft eingeschlagen

Bestimmung der Coronabehandlungsintensität

Die Coronabehandlung wurde so ausgeführt, daß die behandelte Folienoberfläche jeweils eine Behandlungsintensität von 38-39 mN/m direkt nach der Behandlung besaß. Eine Ausnahme bildet das Vergleichsbeispiel 3. Bei diesem Folienmuster wurde die Coronabehandlung so ausgeführt, daß die Oberflächenspannung der behandelten Siegelschicht direkt nach der Herstellung bei 41-42 mN/m lag. Die Behandlungsintensität wird mit der sogenannten Tintenmethode bestimmt (DIN 53 364).

Bestimmung der Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farbe abgelöst werden, so wurde die Farbhaftung mit gut und bei deutlicher Farbablösung mit schlecht beurteilt.

Schmelzflußindex

DIN 53 735 bei 230 °C und 21,6 N Belastung

Trübung

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

≦ 17 % = sehr gut (+ +)
≧ 17 % bis 20 % = gut (+)
≧ 20 % bis 25 % = mäßig (±)
≧ 25 % = schlecht (-)

Glanz

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20 °C eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20 °) erfolgt mit:

$\geq$ 115 = sehr gut ( + + )

$\leq$ 115 bis 110 = gut ( + )

$\leq$ 110 bis 100 = mäßig ($\pm$)

$\leq$ 100 = schlecht (-)

Kratzfestigkeit bzw. Kratzempfindlichkeit

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut ( + + ) bezeichnet, wenn die Trübungszunahme weniger als 22 % beträgt, mit gut ( + ), wenn die Trübungszunahme bei 22 bis 25 % liegt, mit mäßig ($\pm$), wenn die Trübungszunahme bei 25 - 30 % liegt und mit schlecht (-) bei Trübungszunahmen von großer 30 %.

In der nachstehenden Tabelle 1 sind die Eigenschaften der dreischichtigen Polyolefinfolien der Beispiele und Vergleichsbeispiele zusammengefaßt.

Die Überlegenheit der erfindungsmäßen Folien entsprechend Beispiel 1 bis Beispiel 5 geht aus der Tabelle deutlich hervor. Die Vergleichsbeispiele 1 bis 8 zeigen zwar bei einzelnen Punkten jeweils gute Eigenschaften, allerdings kann keine Mehrschichtfolie nach den Vergleichsbeispielen 1 bis 8 alle Anforderungen, d. h. niedrige Folientrübung, hoher Oberflächenglanz, homogene Folienoptik, gute Kratzfestigkeit, beidseitig niedrige Siegelanspringtemperatur, beidseitig hohe Siegelnahtfestigkeit, gute Bedruckbarkeit sowie gute Laufsicherheit (Maschinengängigkeit) auf schnellaufenden Verpackungsmaschinen unterschiedlichen Typs (vFFs-, hFFs- und Einschlagmaschine) gleichzeitig erfüllen. Lediglich die erfindungsgemäßen polyolefinischen Mehrschichtfolien aus den Beispielen 1 bis 5 erfüllen alle Anforderungen gleichzeitig.

**Tabelle 1**

| | Trübung 4-lagig [%] | Glanz (Meßwinkel 20°) | | Folienoptik (visuelle Beurteilung) | Kratzfestigkeit [×] | | Siegelanspringtemperatur (15 N/cm², 0,5s) [°C] | | Siegelnahtfestigkeit (1,5 N/cm², 0,5s, 110°C) [N/15 mm] | | Bedruckbarkeit | Maschinengängigkeit (visuelle Beurteilung) | | |
|---|---|---|---|---|---|---|---|---|---|---|---|---|---|---|
| | | A-Seite | C-Seite | | A-Seite | C-Seite | A-Seite | C-Seite | A/A-Seite | C/C-Seite | | vTa maschine | hTa maschine | Einschlag maschine |
| B 1 | ++ | ++ | ++ | homogen | ++ | ++ | 88 | 102 | 2,6 | 1,5 | | ++ | ++ | ++ |
| B 2 | ++ | ++ | ++ | homogen | ++ | ++ | 88 | 102 | 2,6 | 1,5 | ++ | ++ | ++ | ++ |
| B 3 | ++ | ++ | ++ | homogen | ++ | ++ | 88 | 103 | 2,7 | 1,6 | ++ | ++ | ++ | ++ |
| B 4 | ++ | ++ | ++ | homogen | ++ | ++ | 88 | 102 | 2,7 | 1,6 | ++ | ++ | ++ | ++ |
| B 5 | ++ | - | ++ | homogen | ++ | + | 88 | 103 | 2,6 | 1,4 | ++ | ++ | ++ | ++ |
| VB 1 | +/- | +/- | +/- | homogen | ++ | ++ | 88 | 103 | 2,6 | 1,4 | ++ | +/- | +/- | +/- |
| VB 2 | +/- | +/- | +/- | Fließstörungen | ++ | ++ | 89 | 104 | 2,4 | 1,3 | ++ | ++ | ++ | ++ |
| VB 3 | ++ | ++ | ++ | homogen | ++ | ++ | 88 | 120 | 2,5 | 0,3 | ++ | +/- | +/- | +/- |
| VB 4 | ++ | ++ | ++ | homogen | +/- | +/- | 92 | 118 | 2,0 | 0,4 | +/- | +/- | +/- | - |
| VB 5 | - | - | - | Fließstörungen | +/- | +/- | 94 | >130 | 1,8 | 0 | +/- | +/- | +/- | +/- |
| VB 6 | +/- | +/- | +/- | homogen | - | - | 122 | 124 | 0 | 0 | ++ | - | - | - |
| VB 7 | - | - | - | Fließstörungen | +/- | +/- | 120 | >130 | 0 | 0 | +/- | +/- | +/- | +/- |
| VB 8 | +/- | +/- | +/- | homogen | - | - | 87 | 101 | 2,7 | 1,6 | ++ | - | - | - |

B : Beispiel
VB : Vergleichsbeispiel
vTa : vertikale Form - FüllschließhTa : horizontale Form - Füllschließ-

## Patentansprüche

1. Beidseitig niedrigsiegelnde, bedruckbare, biaxial orientierte Polyolefin-Mehrschichtfolie aus einer Basisschicht und mindestens einer Siegelschicht auf jeder Seite der Basisschicht, dadurch gekennzeichnet, daß die Basisschicht ein peroxidisch abgebautes Propylenhomopolymerisat enthält und wobei dessen Abbaufaktor im Bereich von 3 bis 10 liegt und dieser Abbaufaktor definiert ist als

$$A = \frac{S_{G(PP)}}{S_{P(PP)}}$$

worin $S_{G(PP)}$ der Schmelzindex des abgebauten Propylenhomopolymer-Granulats ist und im Bereich von 2 bis 5,5 g/10 min liegt und

worin $S_{P(PP)}$ der Schmelzindex des Propylenhomopolymer-Ausgangspulvers ist und bei kleiner als 1,5 g/10 min liegt, und

die jeweiligen Schmelzindices nach DIN 53 735 bei 21,6 N und 230 °C bestimmt werden und die Siegelschichten ein Ethylen-Propylen-ButylenTerpolymeres und ein Propylen-Butylen-Copolymeres enthalten, wobei eine der beiden äußeren Siegelschichten ein Polydiorganosiloxan und Siliciumdioxidteilchen enthält und nicht coronabehandelt ist und wobei das Polydiorganosiloxan bei der Folienherstellung in Form eines Masterbatches zugegeben wird.

2. Polyolefin-Mehrschichtfolie nach Anspruch 1, dadurch gekennzeichnet, daß der Ethylen-Propylen-Butylen-Gehalt in der Ter-/Copolymermischung der Siegelschichten 0,1 bis 7 Gew.-% Ethylen, 53 bis 89,9 Gew.-% Propylen und 10 bis 40 Gew.-% Butylen beträgt.

3. Polyolefin-Mehrschichtfolie nach Anspruch 1 und/oder 2, dadurch gekennzeichnet, daß die eine nicht coronabehandelte äußere Siegelschicht l,0 bis 4,0 Gew.-% Polydiorganosiloxan enthält.

4. Polyolefin-Mehrschichtfolie nach einem oder mehreren der Ansprüche 1 bis 3, dadurch gekennzeichnet, daß die eine nicht coronabehandelte äußere Siegelschicht ein Polydiorganosiloxan mit einer Viskosität von größer 50.000 mm$^2$/s bei 25 °C enthält.

5. Polyolefin-Mehrschichtfolie nach einem oder mehreren der Ansprüche 1 bis 4, dadurch gekennzeichnet, daß die eine nicht coronabehandelte äußere Siegelschicht 0,1 bis 1,0 Gew.-% Siliciumdioxidteilchen enthält.

6. Polyolefin-Mehrschichtfolie nach einem oder mehreren der Ansprüche 1 bis 5, dadurch gekennzeichnet, daß die eine nicht coronabehandelte äußere Siegelschicht Siliciumdioxidteilchen mit einem mittleren Teilchendurchmesser von 2 bis 4 $\mu$m enthält.

7. Polyolefin-Mehrschichtfolie nach einem oder mehreren der Ansprüche 1 bis 6, dadurch gekennzeichnet, daß das Masterbatch als Wirkstoffkomponente das Polydiorganosiloxan und als Basismaterial das Gemisch aus Ethylen-Propylen-Butylen-Terpolymeren und Propylen-Butylen-Copolymeren enthält.

8. Polyolefin-Mehrschichtfolie nach einem oder mehreren der Ansprüche 1 bis 7, dadurch gekennzeichnet, daß die andere äußere Siegelschicht coronabehandelt ist.

9. Polyolefin-Mehrschichtfolie nach Anspruch 8, dadurch gekennzeichnet, daß die andere äußere Siegelschicht Siliciumdioxidteilchen enthält.

10. Polyolefin-Mehrschichtfolie nach Anspruch 8 oder 9, dadurch gekennzeichnet, daß die andere äußere Siegelschicht 0,1 bis 1,0 Gew.-% Siliciumdioxidteilchen enthält.

11. Polyolefin-Mehrschichtfolie nach Anspruch 9 oder 10, dadurch gekennzeichnet, daß die Siliciumdioxidteilchen einen Teilchendurchmesser von 2 bis 4 $\mu$m besitzen.

12. Polyolefin-Mehrschichtfolie nach einem oder mehreren der Ansprüche 8 bis 11, dadurch gekennzeichnet, daß die andere äußere coronabehandelte Siegelschicht nicht-inkorporiertes Polydiorganosiloxan auf ihrer Außenfläche aufweist.

13. Polyolefin-Mehrschichtfolie nach Anspruch 12, dadurch gekennzeichnet, daß die relative Polydiorganosiloxanbelegung höchstens 15 beträgt, wobei dieser Wert mittels ESCA bestimmbar ist.

14

**14.** Polyolefin-Mehrschichtfolie nach einem oder mehreren der Ansprüche 8 bis 13, dadurch gekennzeichnet, daß die andere äußere coronabehandelte Siegelschicht direkt nach der Herstellung eine Oberflächenspannung von größer 36 mN/m aufweist.

**15.** Polyolefin-Mehrschichtfolie nach einem oder mehreren der Ansprüche 1 bis 14, dadurch gekennzeichnet, daß die Schichtdicken der Siegelschichten größer 0,5 μm sind.

**16.** Polyolefin-Mehrschichtfolie nach einem oder mehreren der Ansprüche 1 bis 15, dadurch gekennzeichnet, daß die Basisschicht Additive enthält.

**17.** Polyolefin-Mehrschichtfolie nach einem oder mehreren der Ansprüche 1 bis 16, dadurch gekennzeichnet, daß das Polydiorganosiloxan ein Polydialkylsiloxan ist.

**18.** Polyolefin-Mehrschichtfolie nach Anspruch 17, dadurch gekennzeichnet, daß das Polydialkylsiloxan 1 bis 4 Kohlenstoffatome im Alkylteil besitzt.

**19.** Polyolefin-Mehrschichtfolie nach einem oder mehreren der Ansprüche 1 bis 18, dadurch gekennzeichnet, daß die Basisschicht Antistatika und/oder Stabilisatoren und/oder mit dem Polymeren der Siegelschicht verträgliche Kohlenwasserstoffharze enthält.

**20.** Polyolefin-Mehrschichtfolie nach einem oder mehreren der Ansprüche 1 bis 19, dadurch gekennzeichnet, daß mindestens eine Siegelschicht Antistatika und/oder Stabilisatoren und/oder mit dem Polymeren der Basisschicht verträgliche Kohlenwasserstoffharze enthält.

**21.** Verfahren zur Herstellung einer Polyolefin-Mehrschichtfolie nach Anspruch 1, dadurch gekennzeichnet, daß man die den einzelnen Schichten der Folie entsprechenden Schmelzen durch eine Flachdüse coextrudiert, die so erhaltene Folie zur Verfestigung abkühlt, die Folie biaxial strckt, die biaxial gestreckte Folie thermofixiert und gegebenenfalls an der zur Coronabehandlung vorgesehenen Oberflächenschicht coronabehandelt.

**22.** Verwendung der Polyolefin-Mehrschichtfolien nach einem oder mehreren der Ansprüche 1 bis 20 als Verpackungsfolie und zur Herstellung von Laminaten mit Papier, Pappe, metallisierten Kunststoffolien und Kunststoffolien.

**Claims**

**1.** A printable, biaxially oriented polyolefin multilayer film which is low-temperature sealing on both sides and comprises a base layer and at least one sealing layer on each side of the base layer, wherein the base layer contains a peroxidically degraded propylene homopolymer whose degradation factor is in the range from 3 to 10, where this degradation factor is defined as

$$A = \frac{S_{G(PP)}}{S_{P(PP)}}$$

in which $S_{G(PP)}$ is the melt flow index of the degraded propylene homopolymer granules and is in the range from 2 to 5.5 g/10 min and
in which $S_{P(PP)}$ is the melt flow index of the propylene homopolymer starting powder and is less than 1.5 g/ 10 min, and
the respective melt flow indices are determined in accordance with DIN 53 735 at 21.6 N and 230°C, and the sealing layers contain an ethylene/propylene/butylene terpolymer and a propylene/butylene copolymer, where one of the two outer sealing layers contains a polydiorganosiloxane and silicon dioxide particles and has not been corona-treated and where the polydiorganosiloxane is added in the form of a masterbatch during the film production.

**2.** A polyolefin multilayer film as claimed in claim 1, wherein the ethylene/propylene/butylene content in the terpolymer/copolymer mixture of the sealing layers is 0.1 to 7% by weight of ethylene, 53 to 89.9% by weight of propylene and 10 to 40% by weight of butylene.

3. A polyolefin multilayer film as claimed in claim 1 and/or 2, wherein that outer sealing layer which is not corona-treated contains 1.0 to 4.0% by weight of polydiorganosiloxane.

4. A polyolefin multilayer film as claimed in one or more of claims 1 to 3, wherein that outer sealing layer which is not corona-treated contains a polydiorganosiloxane having a viscosity of more than 50,000 mm$^2$/s at 25°C.

5. A polyolefin multilayer film as claimed in one or more of claims 1 to 4, wherein that outer sealing layer which is not corona-treated contains 0.1 to 1.0% by weight of silicon dioxide particles.

6. A polyolefin multilayer film as claimed in one or more of claims 1 to 5, wherein that outer sealing layer which is not corona-treated contains silicon dioxide particles having an average particle diameter of 2 to 4 $\mu$m.

7. A polyolefin multilayer film as claimed in one or more of claims 1 to 6, wherein the masterbatch contains the polydiorganosiloxane as active component and the mixture of ethylene/propylene/butylene terpolymer and propylene/butylene copolymer as base material.

8. A polyolefin multilayer film as claimed in one or more of claims 1 to 7, wherein the other outer sealing layer is corona-treated.

9. A polyolefin multilayer film as claimed in claim 8, wherein the other outer sealing layer contains silicon dioxide particles.

10. A polyolefin multilayer film as claimed in claim 8 or 9, wherein the other outer sealing layer contains 0.1 to 1.0% by weight of silicon dioxide particles.

11. A polyolefin multilayer film as claimed in claim 9 or 10, wherein the silicon dioxide particles have a particle diameter of 2 to 4 $\mu$m.

12. A polyolefin multilayer film as claimed in one or more of claims 8 to 11, wherein the other outer corona-treated sealing layer has non-incorporated polydiorganosiloxane on its outer surface.

13. A polyolefin multilayer film as claimed in claim 12, wherein the relative polydiorganosiloxane coating is at most 18, this value being determinable by means of ESCA.

14. A polyolefin multilayer film as claimed in one or more of claims 8 to 13, wherein the other outer corona-treated sealing layer has a surface tension of more than 36 mN/m immediately after production.

15. A polyolefin multilayer film as claimed in one or more of claims 1 to 14, wherein the layer thicknesses of the sealing layers are greater than 0.5 $\mu$m.

16. A polyolefin multilayer film as claimed in one or more of claims 1 to 15, wherein the base layer contains additives.

17. A polyolefin multilayer film as claimed in one or more of claims 1 to 16, wherein the polydiorganosiloxane is a polydialkylsiloxane.

18. A polyolefin multilayer film as claimed in claim 17, wherein the polydialkylsiloxane has 1 to 4 carbon atoms in the alkyl part.

19. A polyolefin multilayer film as claimed in one or more of claims 1 to 18, wherein the base layer contains antistatic agents and/or stabilizers and/or hydrocarbon resins compatible with the polymers in the sealing layer.

16

**20.** A polyolefin multilayer film as claimed in one or more of claims 1 to 19, wherein at least one sealing layer contains antistatic agents and/or stabilizers and/or hydrocarbon resins compatible with the polymers of the base layer.

**21.** A process for the production of a polyolefin multilayer film as claimed in claim 1, which comprises co-extruding the melts corresponding to the individual layers of the film through a sheet die, cooling the resulting film to solidify it, biaxially stretching the film, heat-setting the biaxially stretched film and, optionally, subjecting it to corona treatment on the surface layer intended for corona treatment.

**22.** Use of a polyolefin multilayer films as claimed in one or more of claims 1 to 20 as packaging film and for the production of laminates with paper, cardboard, metallised plastic films and plastic films.

**Revendications**

**1.** Pellicule multicouche polyoléfinique orientée biaxialement, imprimable, soudable à basse température des deux côtés, constituée d'une couche de base et d'au moins une couche de soudage sur chaque côté de la couche de base, caractérisée en ce que la couche de base contient un homopolymère de propylène dégradé par un peroxyde, et dont le facteur de dégradation est dans la plage allant de 3 à 10, et ce facteur de dégradation étant défini par le rapport

$$A = \frac{S_{G(PP)}}{S_{P(PP)}}$$

dans lequel

$S_{G(PP)}$ est l'indice de fluidité à chaud du produit granulé constitué d'homopolymère de propylène dégradé, et se situe dans la plage allant de 2 à 5,5 g/10 min, et

$S_{P(PP)}$ est l'indice de fluidité à chaud de la poudre initiale d'homopolymère de propylène et est inférieur à 1,5 g/10 min, et

l'indice de fluidité à chaud respectif étant déterminé selon DIN 53 735, à 230 °C et sous une charge de 21,6 N, et les couches de soudage contiennent un terpolymère éthylène/propylène/butylène et un copolymère propylène/butylène, l'une des deux couches de soudage externes contenant un polydiorganosiloxane et des particules de silice, et n'étant pas traitée par effet couronne, et le polydiorganosiloxane étant ajouté sous forme d'un mélange-maître, lors de la fabrication de la pellicule.

**2.** Pellicule multicouche polyoléfinique selon la revendication 1, caractérisée en ce que la teneur en éthylène/propylène/butylène dans le mélange de terpolymère et de copolymère des couches de soudage va de 0,1 à 7 % en poids pour l'éthylène, de 53 à 89,9 % en poids pour le propylène et de 10 à 40 % en poids pour le butylène.

**3.** Pellicule multicouche polyoléfinique selon la revendication 1 et/ou la revendication 2, caractérisée en ce que la couche de soudage externe non traitée par effet couronne contient de 1,0 à 4,0 % en poids de polydiorganosiloxane.

**4.** Pellicule multicouche polyoléfinique selon une ou plusieurs des revendications 1 à 3, caractérisée en ce que la couche de soudage externe non traitée par effet couronne contient un polydiorganosiloxane ayant une visosité de plus de 50 000 mm$^2$/s à 25 °C.

**5.** Pellicule multicouche polyoléfinique selon une ou plusieurs des revendications 1 à 4, caractérisée en ce que la couche de soudage externe non traitée par effet couronne contient de 0,1 à 1,0 % en poids de particules de silice.

**6.** Pellicule multicouche polyoléfinique selon une ou plusieurs des revendications 1 à 5, caractérisée en ce que la couche de soudage externe non traitée par effet couronne contient des particules de silice ayant un diamètre moyen de particules de 2 à 4 $\mu$m.

7. Pellicule multicouche polyoléfinique selon une ou plusieurs des revendications 1 à 6, caractérisée en ce que le mélange-maître contient, en tant que composant actif, le polydiorganosiloxane et, en tant que matériau de base, le mélange de terpolymère éthylène/propylène/butylène et de copolymère propylène/butylène.

8. Pellicule multicouche polyoléfinique selon une ou plusieurs des revendications 1 à 7, caractérisée en ce que l'autre couche de soudage externe est traitée par effet couronne.

9. Pellicule multicouche polyoléfinique selon la revendication 8, caractérisée en ce que l'autre couche de soudage externe contient des particules de silice.

10. Pellicule multicouche polyoléfinique selon la revendication 8 ou 9, caractérisée en ce que l'autre couche de soudage externe contient de 0,1 à 1,0 % en poids de particules de silice.

11. Pellicule multicouche polyoléfinique selon la revendication 9 ou 10, caractérisée en ce que les particules de silice ont un diamètre de particules de 2 à 4 $\mu$m.

12. Pellicule multicouche polyoléfinique selon une ou plusieurs des revendications 8 à 11, caractérisée en ce que l'autre couche de soudage externe traitée par effet couronne comporte sur sa face externe un polydiorganosiloxane non incorporé.

13. Pellicule multicouche polyoléfinique selon la revendication 12, caractérisée en ce que le recouvrement relatif par le polydiorganosiloxane s'élève au maximum à 18, cette valeur étant déterminable par ESCA (spectroscopie électronique pour analyse chimique).

14. Pellicule multicouche polyoléfinique selon une ou plusieurs des revendications 8 à 13, caractérisée en ce que l'autre couche de soudage externe, traitée par effet couronne, présente, immédiatement après la fabrication, une tension superficielle supérieure à 36 mN/m.

15. Pellicule multicouche polyoléfinique selon une ou plusieurs des revendications 1 à 14, caractérisée en ce que les épaisseurs des couches de soudage sont supérieures à 0,5 $\mu$m.

16. Pellicule multicouche polyoléfinique selon une ou plusieurs des revendications 1 à 15, caractérisée en ce que la couche de base contient des additifs.

17. Pellicule multicouche polyoléfinique selon une ou plusieurs des revendications 1 à 16, caractérisée en ce que le polydiorganosiloxane est un polydialkylsiloxane.

18. Pellicule multicouche polyoléfinique selon la revendication 17, caractérisée en ce que le polydialkylsiloxane comporte de 1 à 4 atomes de carbone dans le fragment alkyle.

19. Pellicule multicouche polyoléfinique selon une ou plusieurs des revendications 1 à 18, caractérisée en ce que la couche de base contient des agents antistatiques et/ou des stabilisants et/ou des résines hydrocarbonées compatibles avec le polymère de la couche de soudage.

20. Pellicule multicouche polyoléfinique selon une ou plusieurs des revendications 1 à 19, caractérisée en ce qu'au moins une couche de soudage contient des agents antistatiques et/ou des stabilisants et/ou des résines hydrocarbonées compatibles avec le polymère de la couche de base.

21. Procédé pour la fabrication d'une pellicule multicouche polyoléfinique selon la revendication 1, caractérisé en ce que les masse fondues correspondant aux couches individuelles de la pellicule sont extrudées à travers un filière plate, la pellicule ainsi obtenue est refroidie pour la solidification, la pellicule est étirée biaxialement, la pellicule étirée biaxialement est thermofixée et éventuellement traitée par effet couronne, pour le traitement par effet couronne de la couche superficielle prévue.

22. Utilisation des pellicules multicouches polyoléfiniques selon une ou plusieurs des revendications 1 à 20, en tant que pellicule d'emballage et pour la fabrication de stratifiés avec du papier, du carton, des pellicules de matière plastique métallisées et des pellicules de matière plastique.